# EUROPEAN PATENT APPLICATION

(11) **EP 4 851 522 A1**
(43) Date of publication of application: **09.12.2026**
(21) Application number: 26183264.6
(22) Date of filing: 05.06.2026
(51) Int. Cl.: F16M 13/02, F16M 11/04, F16M 11/10, F16M 11/20, F16M 11/24

(54) **UNIVERSAL HEIGHT ADJUSTABLE SOUNDBAR MOUNT WITH MICRO-ADJUSTABLE LEVELING**

(30) Priority: 04.06.2025 US 202563817690 P; 03.06.2026 US 202619697187
(71) Applicant: Legrand AV Inc., Minnetonka, MN 55343 (US)
(72) Inventor: MAVES, Adam, Minnetonka, 55343 (US)
(74) Representative: Patentanwälte Geyer, Fehners & Partner mbB

(57) **Abstract**

A soundbar mount system (20) providing selective vertical positioning of a soundbar (138) relative to a mounted television (120), as well as separate vertical position adjustment for leveling, depth adjustment of the soundbar relative to the television, and fore-and-aft tilt adjustment to account for sagging or drooping of the soundbar on the mount.

## Description

### RELATED APPLICATIONS

The present application claims the benefit of U.S. Provisional Application No. 63/817,690, entitled UNIVERSAL HEIGHT ADJUSTABLE SOUNDBAR MOUNT WITH MICRO-ADJUSTABLE LEVELING, and filed June 4, 2025, said application being hereby fully incorporated herein in its entirety by reference, and claims the benefit of U.S. Patent Application No. 19/697,187, entitled UNIVERSAL HEIGHT ADJUSTABLE SOUNDBAR MOUNT WITH MICRO-ADJUSTABLE LEVELING, and filed June 3, 2026, said application being hereby fully incorporated herein in its entirety by reference.

### TECHNICAL FIELD

The invention is related to soundbar mounts, and more specifically systems for mounting soundbars in conjunction with televisions.

### BACKGROUND

Flat screen televisions and monitors, such as those using LCD, LED, or OLED technology, have become very common. Such devices can provide a large, lightweight, high performance, high resolution display screen that is also very thin. While such devices typically have built-in speakers, those speakers are usually not sufficient to render high-quality sound to match the high quality video reproduction of the screen. Hence, it is desirable to augment the screen with a device, such as a soundbar, that can produce high quality stereo sound.

It is also desirable for televisions to be mounted to a wall to be freely maneuverable to adjust the orientation of the screen to fit user preferences, and to conserve floor space. Mounts often have extendable arms and tilt and swivel capability - referred to in the industry as "full-motion" mounts. If a soundbar is used with a television, it is typically preferable that the soundbar be located adjacent to the television to provide the best viewing and listening experience, and to simplify the wiring arrangements.

A drawback of prior art mounts that enable attachment of a soundbar to a television mount, however, is that such mounts may not account for varying screen sizes. If the soundbar is to be mounted immediately adjacent the screen, the soundbar mount needs to enable adjustments for positioning the soundbar, depending on the size of the screen.

Moreover, where a soundbar is to be mounted below the screen, alignment of the mount with the screen edge can be difficult, especially if the soundbar is large and heavy. An uneven gap between the screen edge and the soundbar can be aesthetically displeasing. Also, sagging due to the weight of the soundbar can occur in the prior art mounts, which compromises the aesthetics of the overall installation.

What is needed are systems and methods that address the drawbacks of the prior art mounts.

### SUMMARY

The invention is defined in claim 1. Further developments are given in the dependent claims.
According to embodiments of the inventions disclosed herein, systems and methods are provided that enable micro-adjustment of the leveling and position of a soundbar located adjacent a television screen. The soundbar mount system can provide selective vertical positioning of a soundbar relative to a mounted television, as well as separate vertical position adjustment for leveling, depth adjustment of the soundbar relative to the television, and fore-and-aft tilt adjustment to account for sagging or drooping of the soundbar on the mount.

According to embodiments, a soundbar mount system for coupling a soundbar to a television includes a television interface assembly having a ratchet mechanism with a mechanism housing with a pair of inwardly projecting tabs and a pair of ratchet assemblies, each ratchet assembly comprising a rachet assembly housing, a ratchet wheel with a projecting tip rotatably mounted in the housing, and a biasing spring disposed between one of the projecting tabs and a portion of the rachet assembly housing, the rachet assembly being slidable within the mechanism housing, a release handle operably coupled to the ratchet assemblies, and a pair of television interface arms operably coupled to the mechanism housing and extending outwardly therefrom. The system also has an elongate positioning column including a track having a rear wall and a pair of spaced-apart side walls defining a channel, each of the side walls defining a multiplicity of apertures, and a central tube received in the channel, the central tube presenting a pair of opposing sides. The ratchet mechanism is slidably received on the elongate positioning column with each of the pair of ratchet mechanisms disposed in the channel adjacent a separate one of the pair of opposing sides of the central tube and wherein the projecting tip of the ratchet wheel of each of the pair of ratchet mechanisms is engageable with the multiplicity of apertures in a separate one of the pair of side walls of the track. A soundbar mount assembly is operably coupled to an end of the positioning column, the soundbar mount assembly including an elongate hanger bar and a pair of soundbar mount legs slidably disposed on the elongate hanger bar. The soundbar mount legs are selectively positionable along a longitudinal length of the hanger bar in a spaced-apart relation, each sound bar leg including a body portion coupled to the elongate hanger bar and an attachment bracket assembly including a sound bar shelf operably coupled to the column portion.

In embodiments, the soundbar mount assembly is selectively shiftable downward by pulling the release handle, thereby causing the carriers of the ratchet assemblies to shift downward in the mechanism housing against a bias of the biasing springs and the projecting tips of the ratchet wheels to disengage from the apertures in the side walls of the track.

In embodiments, each attachment bracket assembly includes a column, the soundbar shelf being coupled to the column, the column being pivotally coupled to the body portion, and a tilt adjustment control is provided to drive pivoting of the attachment bracket assembly relative to the body portion to enable a sag adjustment of the soundbar.

The body portion of each soundbar leg can define an elongate aperture with the elongate hanger bar received therethrough, and a vertical adjustment control is provided to drive vertical shifting of the soundbar leg relative to the elongate hanger bar to enable leveling adjustment of the soundbar.

The soundbar shelf can define an elongate aperture for receiving a fastener to attach the soundbar to the soundbar shelf, the elongate aperture enabling shifting of the fastener to adjust a depth position of the soundbar.

In embodiments, the elongate hanger bar includes a pair of lateral bars joined by a connector.

In embodiments, the soundbar mount system can further include a soundbar operably coupled to the soundbar shelves.

In embodiments, the soundbar mount system can further include a television operably coupled to the television interface assembly and a television mount coupling the soundbar mount system to a wall.

The above summary is not intended to describe each illustrated embodiment or every implementation of the subject matter hereof. The invention is explained in more detail below by means of embodiments with reference to the accompanying drawings, which also disclose features essential to the invention. These embodiments are for illustrative purposes only and are not to be construed as limiting. For example, a description of an embodiment comprising a plurality of elements or components is not to be construed as meaning that all such elements or components are necessary for implementation. Rather, other embodiments may also include alternative elements and components, fewer elements or components, or additional elements or components. Elements or components of different embodiments may be combined with one another, unless otherwise stated. Modifications and variations described for one of the embodiments may also be applicable to other embodiments. To avoid repetition, identical or corresponding elements in different figures are designated by the same reference numerals and are not explained more than once. The figures and the detailed description that follow more particularly exemplify various embodiments.

### BRIEF DESCRIPTION OF THE DRAWINGS

The subject matter hereof may be more completely understood in consideration of the following detailed description of various embodiments in connection with the accompanying figures, in which:
FIG. 1 is a front isometric view of a soundbar mounting system according to an embodiment of the invention;
FIG. 1A is a front isometric view of a television mounted to a wall and a sound bar mounted to the television with the soundbar mounting system according to the embodiment of FIG. 1;
FIG. 2 is a partially exploded view of the ratchet mechanism of the soundbar mounting system of FIG. 1;
FIG. 3 is an elevation view of the ratchet mechanism of the soundbar mounting system with portions omitted for clarity;
FIG. 4 is a rear isometric view of a latch carrier of the ratchet mechanism;
FIG. 5 is a front isometric view of a latch carrier of the ratchet mechanism;
FIG. 6 is a front isometric view of the soundbar interface of the soundbar mounting system of FIG. 1;
FIG. 7 is a partial exploded view of the soundbar interface of FIG. 6;
FIG. 8 is a rear isometric view of one of the soundbar attachment assemblies of the sound bar interface of FIG. 6;
FIG. 9 is an isometric cross-sectional view of the soundbar attachment assembly of FIG. 8, taken at section 9-9 of FIG. 8;
FIG. 10 is an exploded view of the soundbar interface of FIG. 6;
FIG. 11 is a rear isometric view of the positioning column, television interface, and release handle of the system of FIG. 1;
FIG. 12 is a rear isometric view of the positioning column of the system of FIG. 1;
FIG. 13 is a partial rear bottom isometric view of the ratchet mechanism of FIG. 1;
FIG. 14 is an exploded view depicting the television interface arms, rachet mechanism, and positioning column of the system of FIG. 1 being attached to a television;
FIG. 15 is a rear isometric view of the system of FIG. 1 attached to the rear side of a television and being coupled to a television mount on a wall;
FIG. 16 is a front elevation view depicting the system of FIG. 1 being adjusted with a screwdriver to alter the height and leveling of an attached sound bar;
FIG. 17 is a bottom partial isometric view showing the attachment of a soundbar to the system of FIG. 1;
FIG. 18 is a side elevation showing depth adjustment of a soundbar on the system of FIG. 1;
FIG. 19 is a partial bottom isometric view of the system of FIG. 1, depicting adjustment of the spacing of the soundbar mount legs;
FIG. 20 is a partial rear isometric view of the system of FIG. 1, depicting tilt adjustment of the soundbar mount leg;
FIG. 21 is a side elevation view of the system of FIG. 1, depicting tilt adjustment of a soundbar using adjustment of the soundbar mount leg;
FIG. 22 is a front isometric view of a television with the system of FIG. 1 depicted in phantom, showing raising of the soundbar relative to the television; and
FIG. 23 is a rear isometric view of a television with the system of FIG. 1, depicting lowering of the soundbar relative to the television.

While various embodiments are amenable to various modifications and alternative forms, specifics thereof have been shown by way of example in the drawings and will be described in detail. It should be understood, however, that the intention is not to limit the claimed inventions to the embodiments described. On the contrary, the intention is to cover all modifications, equivalents, and alternatives falling within the spirit and scope of the subject matter as defined by the claims.

### DETAILED DESCRIPTION OF THE DRAWINGS

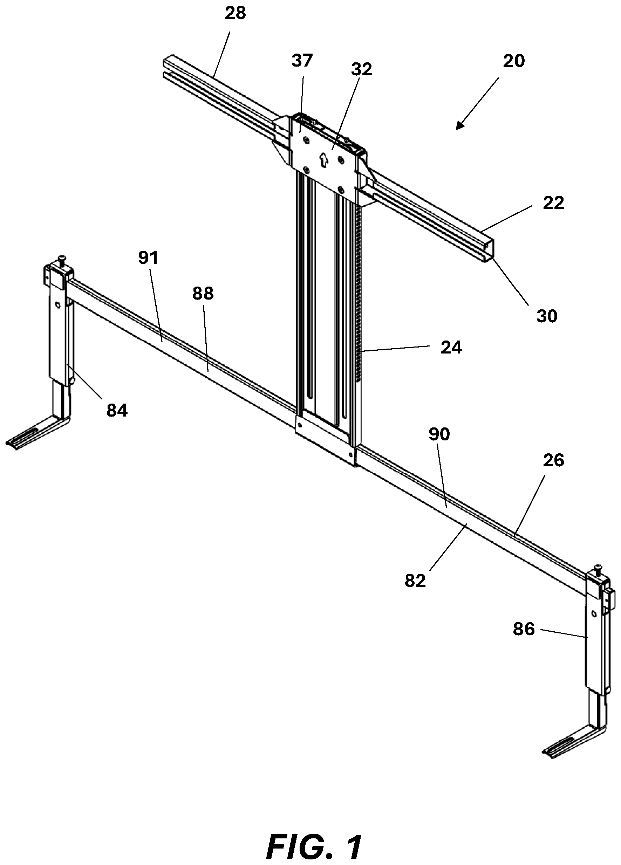

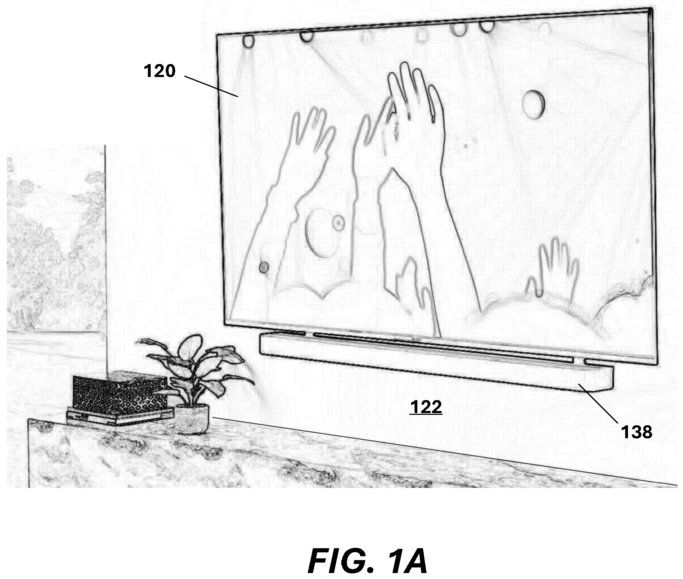

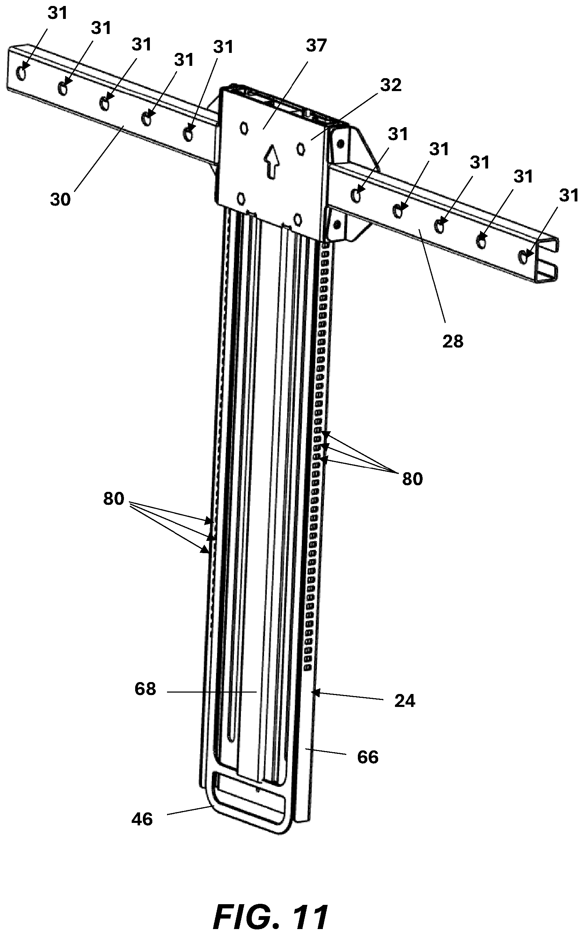

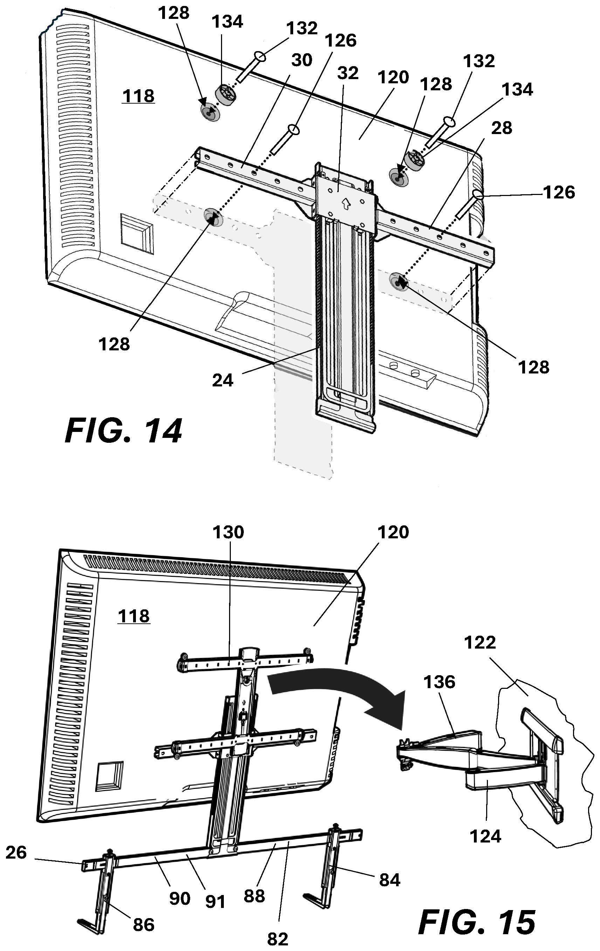

As depicted in FIG. 1, soundbar mounting system 20 generally includes television interface assembly 22, positioning column 24, and soundbar mount assembly 26. Television interface assembly 22 generally includes television interface arms 28, 30, and ratchet mechanism 32. Each of television interface arms 28, 30, defines apertures 31 as depicted in FIG. 11 for receiving fasteners 126 for attaching television interface arms 28, 30, to a television 120 as depicted in FIG. 14.

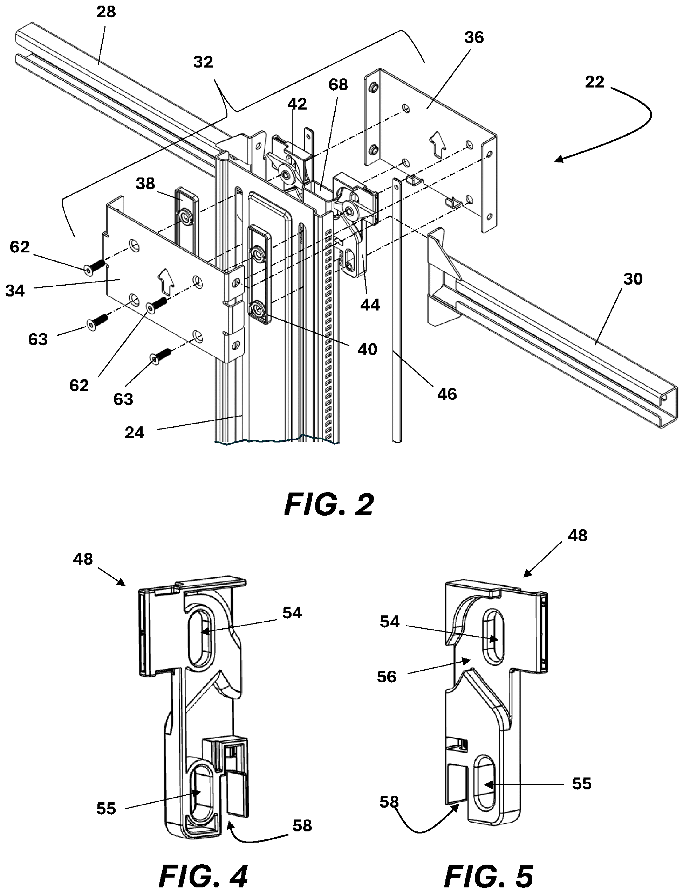

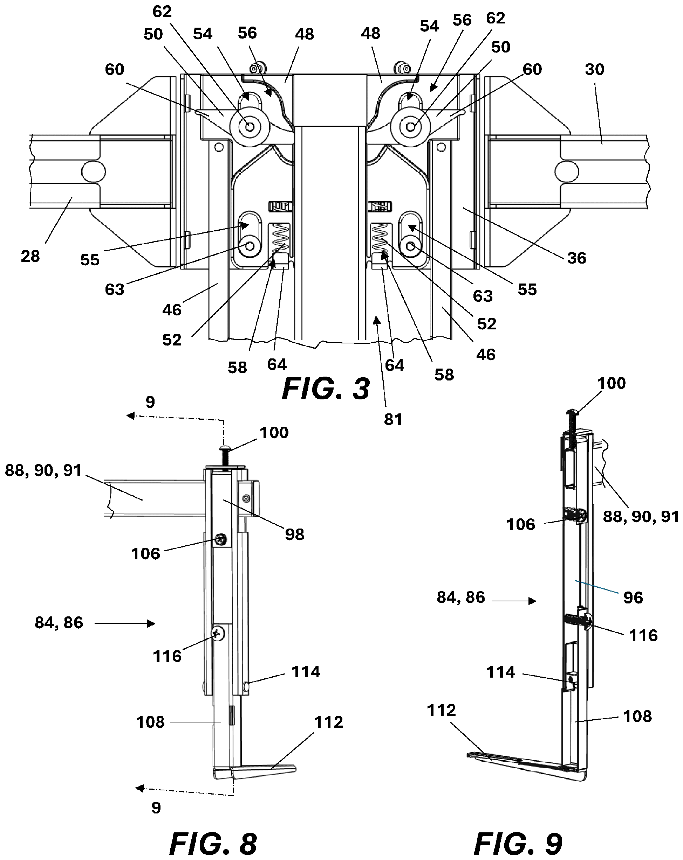

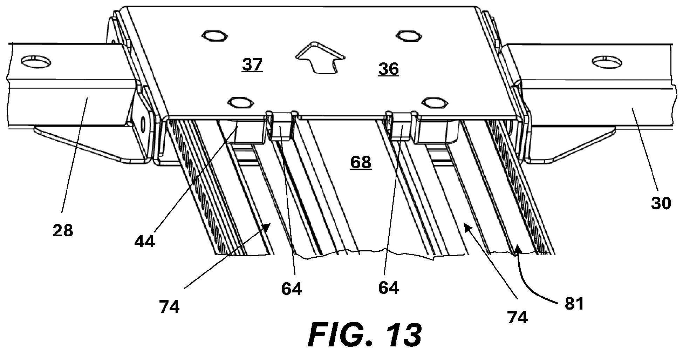

As depicted in FIGs. 2-5 and 13, ratchet mechanism 32 generally includes housing halves 34, 36, forming a mechanism housing 37, glides 38, 40, ratchet assemblies 42, 44, and release handle 46. Ratchet assemblies 42, 44, generally include sliding carrier 48, ratchet wheel 50, and compression spring 52. Sliding carrier 48 defines elongated apertures 54, 55, ratchet wheel recess 56, and spring recess 58. Ratchet wheel 50 is disposed in ratchet wheel recess 56, presents projecting tips 60, and is rotatably received on fasteners 62 extending through apertures 54 between housing halves 34, 36. Fasteners 63 extend through apertures 55 between housing halves 34, 36.

Compression springs 52 are disposed in spring recesses 58, and bear against tabs 64 extending from housing half 36, biasing ratchet assemblies 42, 44, upward inside mechanism housing 37. Release handle 46 is coupled to ratchet assemblies 42, 44, enabling ratchet assemblies 42, 44, to be pulled down against the bias of compression springs 52. Glides 38, 40, enable smooth sliding of positioning column 24 on ratchet mechanism 32. Television interface arms 28, 30, are attached to the sides of rachet mechanism 32 to enable attachment of soundbar mounting system 20 to a mounted television (not depicted).

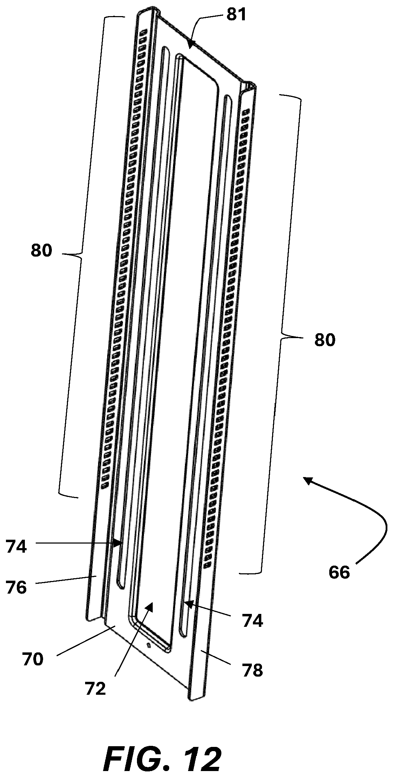

As depicted in FIGS. 11-13, positioning column 24 generally includes track 66 and central tube 68. Track 66 has rear wall 70 defining recess 72, slots 74 on each side of recess 72, and side walls 76, 78. Each of side walls 76, 78, defines a multiplicity of apertures 80. Side walls 76, 78, and rear wall 70 together define a channel 81. Central tube 68 is received in channel 81 in recess 72.

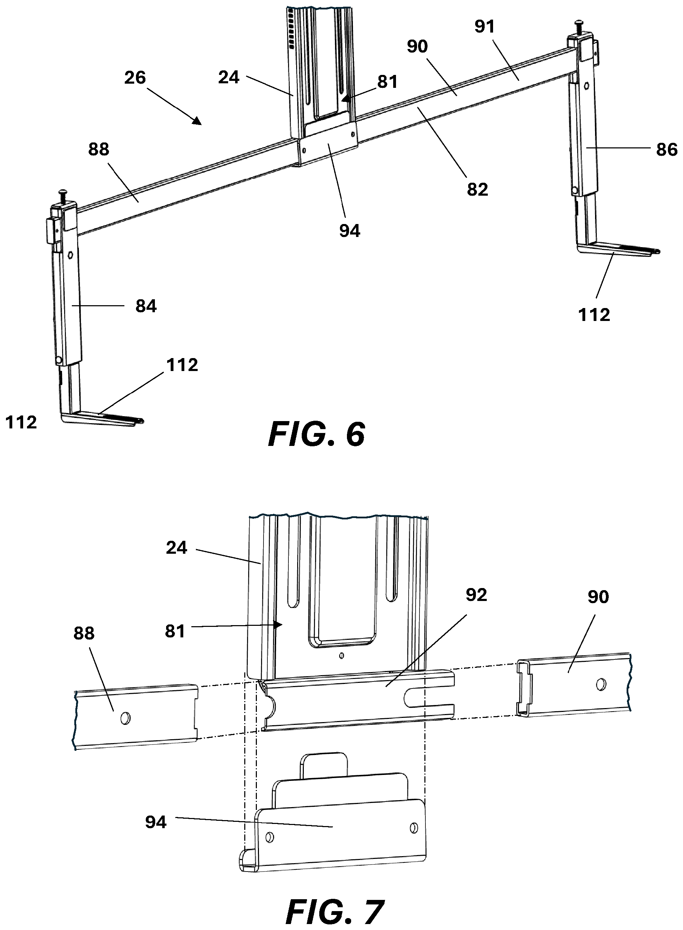

As depicted in FIGs 6-10, soundbar mount assembly 26 generally includes hanger assembly 82, and soundbar mount legs 84, 86. Hanger assembly 82 generally includes lateral bars 88, 90, together defining hanger bar 91, connector 92, and retaining clip 94. As depicted in FIG. 7, connector 92 is attached to the bottom of positioning column 24 and receives lateral bars 88, 90. Retaining clip 94 holds lateral bars 88, 90, in connection with connector 92 and positioning column 24.

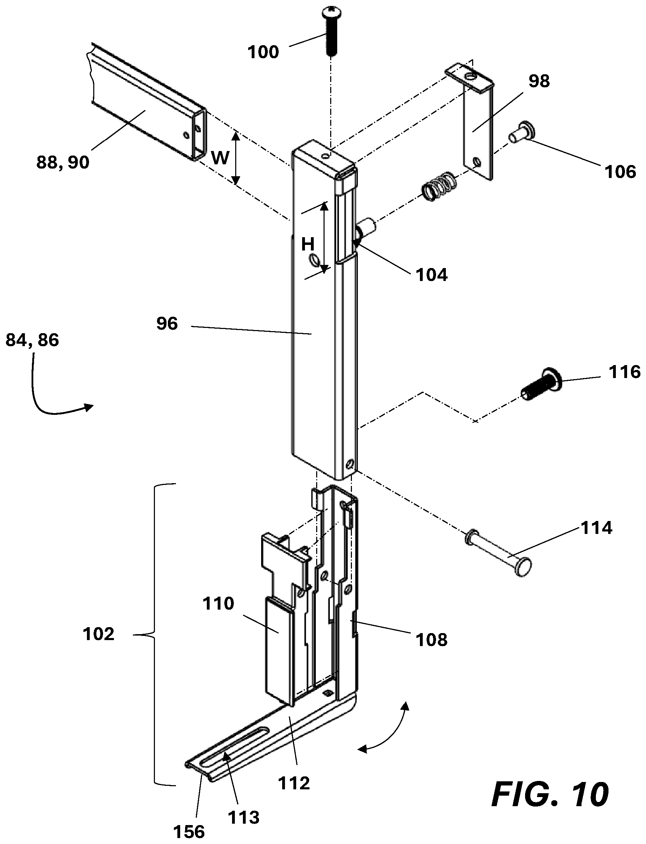

As depicted in the exploded view of FIG. 10, each of soundbar mount legs 84, 86, generally includes body portion 96, retainer 98, a vertical position adjustment control in the form of screw 100, and attachment bracket assembly 102. Body portion 96 defines elongate aperture 104. Lateral bars 88, 90, extend through aperture 104, which has a height dimension H larger than width dimension W of lateral bars 88, 90, to enable each of soundbar mount legs 84, 86, to be vertically shifted with vertical position adjustment control 100 relative to the respective lateral bar 88, 90, on which it is received. Moreover, soundbar mount legs 84, 86, are shiftable along lateral bars 88, 90, to adjust the spacing between soundbar mount legs 84, 86. Retainer 98, with spring-loaded fastener 106, holds soundbar mount legs 84, 86, in a desired position.

Attachment bracket assembly 102 generally includes column 108, cover 110, soundbar shelf 112, pivot pin 114, and tilt adjustment control in the form of screw 116. Column 108 is pivotally coupled to body portion 96 with pivot pin 114 so that column 108 and soundbar shelf 112 can be tilted relative to body portion 96 using tilt adjustment control 116. Soundbar shelf 112 defines elongate aperture 113.

In use, as depicted in FIGs. 14 and 15, soundbar mounting system 20 is attached to the rear side 118 of a television 120 mounted to a wall 122 using a commonly known mount 124 provided for the purpose. Television interface arms 28, 30, are first attached to rachet mechanism 32 and positioning column 24. Then, television interface arms 28, 30, are attached to rear side 118 of television 120 using fasteners 126 inserted through apertures 31. It will be appreciated that television 120 has threaded apertures 128 which are normally disposed in a standard VESA pattern. Apertures 31 can be spaced-apart in television interface arms 28, 30, so as to conform with standard VESA spacing distances.

With television interface arms 28, 30, rachet mechanism 32, and positioning column 24 attached to television 120, soundbar mount assembly 26 can be attached to positioning column 24 as described above. Display interface portion 130 of mount 124 can be attached over soundbar mounting system 20, using fasteners 132, spacers 134, and fasteners 126, sandwiching soundbar mount assembly 26 between display interface portion 130 and rear side 118 of television 120. Display interface portion 130 of mount 124 can then be coupled to swing arm portion 136 of mount 124 to attach television 120 to wall 122 as depicted in FIG. 15. It will be appreciated that while a particular configuration of television mount is depicted and described here, soundbar mounting system 20 can be used with any other television mount known in the art.

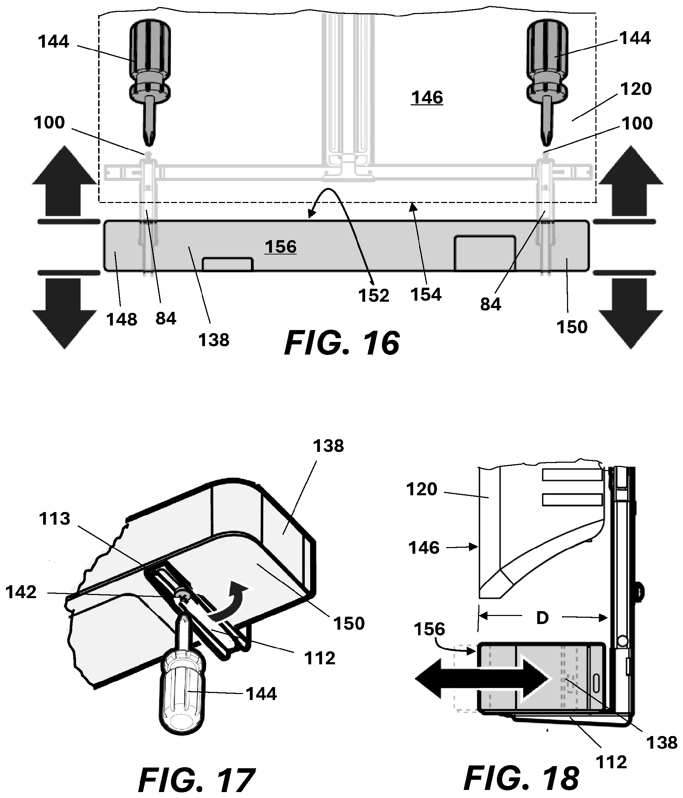

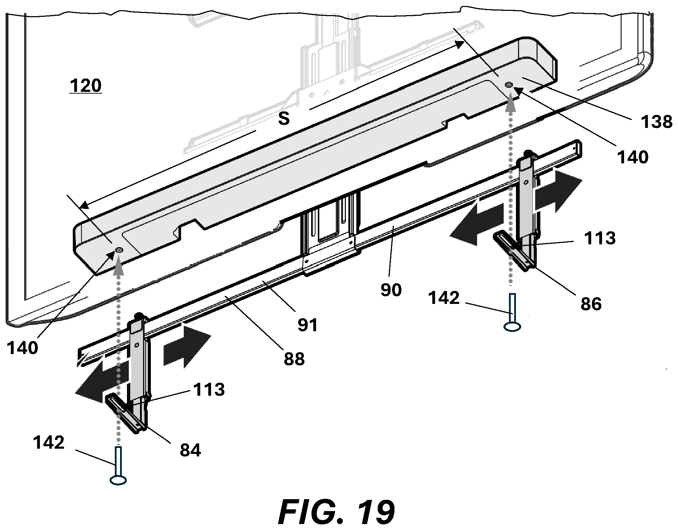

FIGs. 16-21 depict attachment of a soundbar 138 and the various possible adjustments that can be made to soundbar mounting system 20 to adjust the positioning of soundbar 138 to ensure proper functioning and aesthetics. As depicted in FIG. 19, soundbar mount legs 84, 86, can be positioned along lateral bars 88, 90, so that apertures 113 align with fastener holes 140 in soundbar 138. It will be appreciated that the spacing of soundbar mount legs 84, 86, along lateral bars 88, 90, can be adjusted to accommodate any spacing S between fastener holes 140 that may be encountered in various makes and brands of soundbar. Once soundbar mount legs 84, 86, are positioned and secured in place by tightening retainer 98, soundbar 138 can be secured with fasteners 142 through elongate apertures 113 into fastener holes 140.

With soundbar 138 fastened to soundbar shelves 112, soundbar 138 can be adjusted for depth D position as depicted in FIGs. 17 and 18. Fasteners 142 can be loosened with a suitable tool such as screwdriver 144 and soundbar 138 moved forward and rearward as indicated by the arrows in FIG. 18, with fasteners 142 sliding in elongate apertures 113. When the desired position is reached (often with front face 144 of soundbar 138 aligned with screen face 146 of television 120) at each of ends 148, 150, of soundbar 138, fasteners 142 can be re-tightened with screwdriver 144 to secure soundbar 138 in the selected position.

Top side 152 of soundbar 138 can be aligned with bottom edge 154 of television 120 as depicted in FIG. 16. Vertical position adjustment controls 100 can be turned with a tool such as screwdriver 144 to raise or lower ends 148, 150, of soundbar 138 until the desired position is reached.

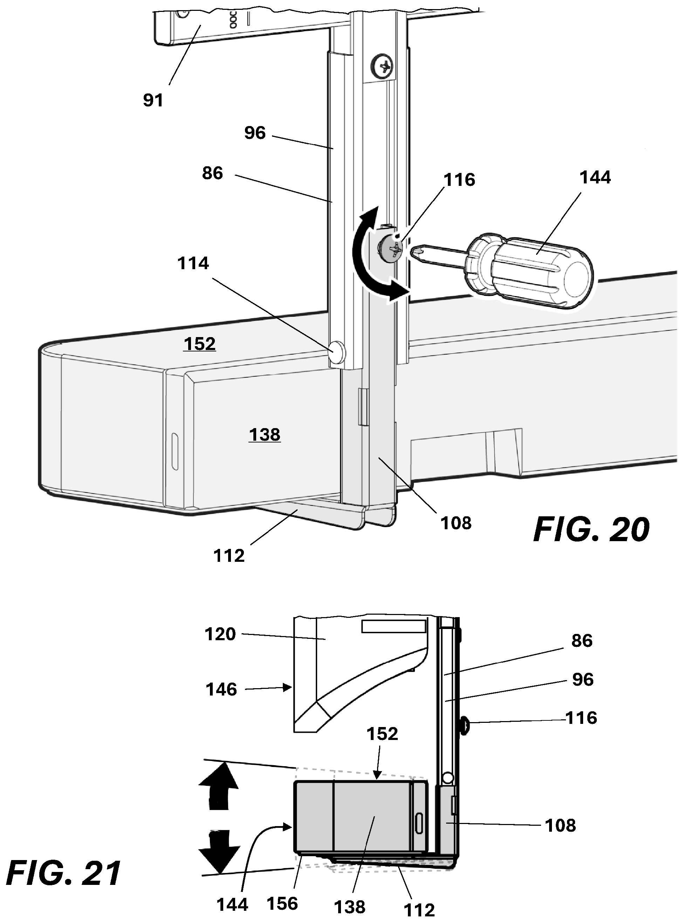

The weight of soundbar 138 can sometimes cause soundbar shelf 112 to "sag" or "droop," especially if soundbar 138 is positioned with front face 144 of soundbar 138 extending outwardly from screen face 146 of television 120, which can be unsightly. As depicted in FIGs. 20 and 21, the tilt of soundbar 138 can be adjusted to account for any "droop" or "sag" of soundbar 138. Tilt adjustment controls 116 on each of soundbar mount legs 84, 86, can be turned with a tool such as screwdriver 144, causing column 108 and soundbar shelf 112 to pivot about pivot pin 114 as previously described. This will cause the front tip 156 of soundbar shelf 112 to be raised or lowered, thereby enabling top side 152 of soundbar 138 to be levelled.

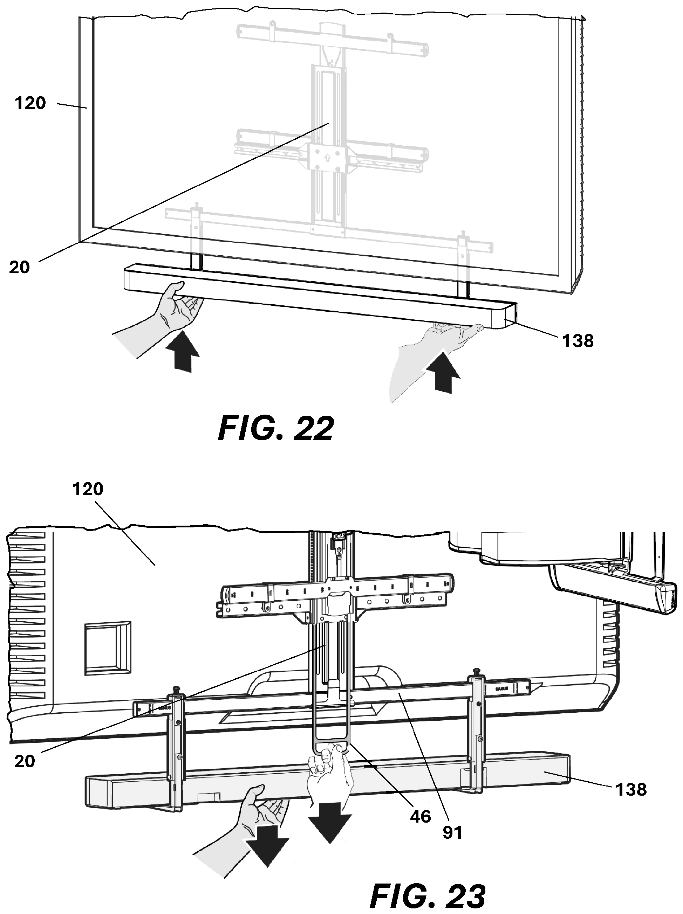

Finally, soundbar 138 can be positioned closer to or further away from television 120 as depicted in FIGs. 22 and 23. In an initial position, projecting tips 60 of ratchet wheels 50 engage with apertures 80 of track 66, preventing downward movement of positioning column 24 and soundbar mount assembly 26 relative to positioning column 24 and rachet mechanism 32 with the attached television 120. Release handle 46 is stowed behind positioning column 24 as depicted in FIG, 11.

Soundbar mount assembly 26 and the attached soundbar 138 can be positioned downward relative to television 120 as depicted by pulling downward on release handle 46 as depicted in FIG. 23. The soundbar 138 is first lifted upward slightly by the user so that pressure is relieved from projecting tips 60 of ratchet wheels 50. As release handle 46 is then pulled downward, ratchet assemblies 42, 44, slide on fasteners 62, 63, against the bias of compression springs 52. Ratchet wheels 50 rotate, so that projecting tips 60 of ratchet wheels 50 disengage from apertures 80. Soundbar mount assembly 26 and positioning column 24 can then be moved downward freely. Once the desired downward position is reached for soundbar mount assembly 26, downward pressure on release handle 46 can be released, enabling ratchet assemblies 42, 44, to return upward, urged by compression springs 52, causing projecting tips 60 of ratchet wheels 50 to reengage with apertures 80 and holding soundbar mount assembly 26 in the desired position. As depicted in FIG. 22, soundbar 138 can be positioned upward by simply lifting it upward. Ratchet wheels 50 will rotate freely in the opposite direction, and the bias of compression springs 52 will projecting tips 60 of ratchet wheels 50 to engage with apertures 80 at the desired position.

Hence in summary, a soundbar 138 can be received on soundbar shelves 112, and soundbar mount assembly 26 adjusted for position a desired distance from television 120 as described above. Soundbar mount legs 84, 86, can be shifted along lateral bars 88, 90, to adjust the spacing between soundbar mount legs 84, 86, to accommodate the width (spacing S between fastener holes 140) of soundbar 138 as necessary. Soundbar 138 can be leveled relative to the television and floor by turning vertical position adjustment controls 100 until the desired leveling is achieved. Soundbar mount legs 84, 86, can be fixed in position with retainer 98 and spring-loaded fastener 106. The tilt of soundbar shelves 112 relative to the floor and television can be adjusted with tilt adjustment controls 116. Each column 108 and connected soundbar shelf 112 will tilt relative to the respective body portion 96 about pivot pin 114 as the tilt adjustment control 116 is turned, thereby eliminating any "sag" or "droop." The soundbar 138 can be positioned up or down relative to television 120 with the use of release handle 46 as described above.

Hence, with the features described above, the position and leveling of a soundbar mounted to a television and mount can be micro-adjusted as desired to improve the functioning and aesthetics of the soundbar installation.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims, it is expressly intended that the provisions of 35 U.S.C. § 112(f) are not to be invoked unless the specific terms "means for" or "step for" are recited in a claim.

## Claims

1. A soundbar mount system for coupling a soundbar to a television comprising:
a television interface assembly comprising:
a ratchet mechanism having a mechanism housing with a pair of inwardly projecting tabs and a pair of ratchet assemblies, each ratchet assembly comprising a rachet assembly housing, a ratchet wheel with a projecting tip rotatably mounted in the housing, and a biasing spring disposed between one of the projecting tabs and a portion of the rachet assembly housing, the rachet assembly being slidable within the mechanism housing;
a release handle operably coupled to the ratchet assemblies; and
a pair of television interface arms operably coupled to the mechanism housing and extending outwardly therefrom;
an elongate positioning column comprising:
a track having a rear wall and a pair of spaced-apart side walls defining a channel, each of the side walls defining a multiplicity of apertures; and
a central tube received in the channel, the central tube presenting a pair of opposing sides;
wherein the ratchet mechanism is slidably received on the elongate positioning column with each of the pair of ratchet mechanisms disposed in the channel adjacent a separate one of the pair of opposing sides of the central tube and wherein the projecting tip of the ratchet wheel of each of the pair of ratchet mechanisms is engageable with the multiplicity of apertures in a separate one of the pair of side walls of the track; and
a soundbar mount assembly operably coupled to an end of the positioning column, the soundbar mount assembly comprising:
an elongate hanger bar; and
a pair of soundbar mount legs slidably disposed on the elongate hanger bar and selectively positionable along a longitudinal length of the hanger bar in a spaced-apart relation, each sound bar leg including a body portion coupled to the elongate hanger bar and an attachment bracket assembly including a sound bar shelf operably coupled to the column portion.

2. The soundbar mount system of claim 1, wherein the soundbar mount assembly is selectively shiftable downward by pulling the release handle, thereby causing the carriers of the ratchet assemblies to shift downward in the mechanism housing against a bias of the biasing springs and the projecting tips of the ratchet wheels to disengage from the apertures in the side walls of the track.

3. The soundbar mount system of claim 1 or 2, wherein each attachment bracket assembly comprises a column, the soundbar shelf being coupled to the column, the column being pivotally coupled to the body portion, and wherein a tilt adjustment control is provided to drive pivoting of the attachment bracket assembly relative to the body portion to enable a sag adjustment of the soundbar.

4. The soundbar mount system of any one of claims 1 to 3, wherein the body portion of each soundbar leg defines an elongate aperture with the elongate hanger bar received therethrough, and a vertical adjustment control is provided to drive vertical shifting of the soundbar leg relative to the elongate hanger bar to enable leveling adjustment of the soundbar.

5. The soundbar mount system of any one of claims 1 to 4, wherein the soundbar shelf defines an elongate aperture for receiving a fastener to attach the soundbar to the soundbar shelf, the elongate aperture enabling shifting of the fastener to adjust a depth position of the soundbar.

6. The soundbar mount system of any one of claims 1 to 5, wherein the elongate hanger bar comprises a pair of lateral bars joined by a connector.

7. The soundbar mount system of any one of claims 1 to 6, further comprising a soundbar operably coupled to the soundbar shelves.

8. The soundbar mount system of any one of claims 1 to 7, further comprising a television operably coupled to the television interface assembly.

9. The soundbar mount system of any one of claims 1 to 8, further comprising a television mount coupling the soundbar mount system to a wall.
